# EUROPÄISCHE PATENTANMELDUNG

(11) **EP 1 273 223 A2**
(43) Veröffentlichungstag der Anmeldung: **08.01.2003**
(21) Anmeldenummer: 02014559.5
(22) Anmeldetag: 01.07.2002
(51) Int. Cl.: A01G 5/04

(54) **Aufhängevorrichtung**

(30) Priorität: 02.07.2001 DE 20110934 U
(71) Anmelder: HBS Verwaltungs GmbH, 28213 Bremen (DE)
(72) Erfinder: Janssen, Susanne, 28213 Bremen (DE)
(74) Vertreter: Glawe, Delfs, Moll & Partner

(57) **Zusammenfassung**

Die Erfindung betrifft eine Vorrichtung zum Aufhängen eines Objektes mittels Bändern, mit einer Einrichtung (3) zum Befestigen dieser Vorrichtung an einer Tragstruktur. Diese ist gekennzeichnet durch ein Gehäuse (1) und wenigstens zwei in der Gehäusewandung angeordnete Durchtrittsöffnungen (2) für die Bänder.

## Beschreibung

Die Erfindung betrifft eine Vorrichtung zum Aufhängen eines Objektes mittels Bändern gemäß dem Oberbegriff des Hauptanspruchs.

Adventskränze und andere Schmuckobjekte werden häufig mittels Bändern an der Decke oder einer sonstigen Tragstruktur aufgehängt. Dies ist schwierig, da es für das richtige Ausrichten eines Adventskranzes auf die genaue Länge mehrerer (in der Regel vier) Bänder ankommt. Der Erfindung liegt die Aufgabe zugrunde, eine Vorrichtung der eingangs genannten Art zu schaffen, die das Aufhängen eines solchen Objektes vereinfacht und die Möglichkeit einer ansprechenden optischen Gestaltung bietet.

Die Erfindung löst diese Aufgabe bei einer eingangs genannten Vorrichtung durch ein Gehäuse und wenigstens zwei in der Gehäusewandung angeordnete Durchtrittsöffnungen für die Bänder.

Zunächst werden einige im Rahmen der Erfindung verwendete Begriffe erläutert.

Aufzuhängende Objekte können sämtliche aus ästhetischen, praktischen oder sonstigen Erwägungen von einer Tragstruktur abzuhängende Objekte sein. Besonders eignet sich die Erfindung zum Anbringen temporär aufzuhängender Objekte wie bspw. von Kränzen, insbesondere Adventskränzen. Die Objekte werden mittels Bändern aufgehängt. Dieser Begriff umfaßt jegliche flexiblen Bänder, Schnüre, Seile oder dergleichen, die sich zum Aufhängen entsprechender Objekte eignen. Besonders bevorzugt ist im Rahmen der Erfindung die Verwendung flacher Bänder, deren Breite erheblich (vorzugsweise wenigstens um den Faktor 10) größer ist als ihre Dicke.

Die erfindungsgemäße Vorrichtung weist eine Einrichtung zum Befestigen an einer Tragstruktur auf. Bei der Tragstruktur kann es sich insbesondere um eine Raumdecke, aber auch um einen Balken oder jegliches Strukturelement handeln, an dem man entsprechende Objekte aufhängen kann. Die Einrichtung zum Befestigen ist vorzugsweise zum wieder lösbaren Befestigen ausgebildet, es kann sich insbesondere um einen Haken, eine Öse oder dergleichen handeln, die mit einem entsprechenden in der Tragstruktur angebrachten Haken zusammenwirkt. Denkbar sind auch Schraubverbindungen, Klebverbindungen, magnetische Verbindungen oder dergleichen.

Erfindungsgemäß ist ein Gehäuse vorgesehen, das eine Gehäusewandung aufweist, die einen Hohlraum teilweise (oder vorzugsweise vollständig) umschließt. In der Gehäusewandung sind wenigstens zwei Durchtrittsöffnungen für die Bänder angeordnet. Der Begriff Durchtrittsöffnung bezeichnet jegliche Öffnung, deren Abmessung eine Durchtritt der verwendeten Bänder erlaubt. Bevorzugt ist die Abmessung der Durchtrittsöffnungen an die Abmessungen der zu verwendeten Bänder angepaßt und weist ein bestimmtes Übermaß gegenüber dem Bandquerschnitt auf, um ein einfaches Durchfädeln zu erlauben. Bei den Durchtrittsöffnungen kann es sich insbesondere um flache Schlitze handeln, deren Länge an die Breite der üblicherweise verwendeten Bänder angepaßt ist. Die Länge kann insbesondere im Bereich 1 bis 5 cm, vorzugsweise 2 bis 5 cm, weiter vorzugsweise 2 bis 4 cm, liegen.

Die Breite beträgt bevorzugt weniger als die Hälfte der Länge, weiter vorzugsweise weniger als 1/5 der Länge, sie kann unter 1/10 der Länge liegen. Sie muß groß genug sein, um das Durchfädeln der üblicherweise flachen Bänder zu erlauben. Die Breite kann insbesondere im Bereich 1 bis 5 mm, vorzugsweise 1 bis 3 mm, liegen.

Die Abmessungen der Durchtrittsöffnungen sind vorzugsweise so ausgebildet, daß sie einerseits ein einfaches Durchfädeln der verwendeten Bänder erlauben, andererseits ein zum Verbinden zweier Bänder verwendeter üblicher Knoten nicht mehr durch diese Durchtrittsöffnungen paßt.

Erfindungsgemäß ist es somit möglich, die Enden der zum Aufhängen des Objektes verwendeten Bänder von außen durch die Durchtrittsöffnungen zu fädeln und innerhalb des Gehäuses mittels eines Knotens zu verbinden. Dieser Knoten kann die Durchtrittsöffnungen nicht passieren, so daß ein Abkippen (starkes Verändern der Lage im Raum) des Objektes durch Verrutschen der Bänder nicht möglich ist. Andererseits kann der Knoten um eine gewisse Strecke innerhalb des Gehäuses zwischen den entsprechenden Durchtrittsöffnungen hin- und hergeschoben werden und erlaubt so eine Feinjustierung der Lage des Objektes im Raum, indem die entsprechenden Längenabschnitte der aus dem Gehäuse ragenden Bänder verlängert bzw. verkürzt werden.

Das Gehäuse ist vorzugsweise geschlossen. Geschlossen im Sinne der Erfindung bedeutet, daß die Vorrichtung im Betriebszustand außer den Durchtrittsöffnungen keine weiteren sichtbaren Öffnungen aufweist, die einen Blick auf das Gehäuseinnere und die darin angeordneten Bänder erlauben würden.

Vorzugsweise ist eine verschließbare Öffnung vorgesehen, um ein einfaches Anbringen der Bänder zu ermöglichen. Als Verschluß kann ein Deckel vorgesehen sein, dieser kann verschraubt, aufgeklemmt, oder dergleichen sein. Die verschließbare Öffnung kann im montierten Zustand der Vorrichtung insbesondere nach unten weisen. Der montierte Zustand ist der übliche Betriebszustand, bei dem die Vorrichtung an einer Tragstruktur hängt und in vorgesehener Weise ein Objekt trägt. Die Raumrichtung "unten" ist die Richtung, in der die Schwerkraft wirkt.

Das Gehäuse kann vorzugsweise eine gerade Zahl von Durchtrittsöffnungen aufweisen, insbesondere können es vier Durchtrittsöffnungen sein. Jeweils zwei Bänder können dann miteinander verknotet werden, diese Knoten können unabhängig voneinander im Gehäuse verschoben werden und ermöglichen ein genaues Justieren der Lage des Objektes im Raum. Adventskränze sind üblicherweise an vier Bändern aufgehängt.

Das Gehäuse kann um seine im montierten Zustand senkrechte (in Richtung der Schwerkraft weisende) Achse rotationssymmetrisch ausgebildet sein. Anzumerken ist, daß die Durchtrittsöffnungen an dieser vollständigen Rotationssymmetrie des Gehäuses notwendigerweise nicht teilnehmen können.

Das Gehäuse kann bspw. als Kugelschale ausgebildet sein. Die Einrichtung zum Befestigen an der Tragstruktur ist in der Mitte der Außenfläche der Kugelschale angeordnet, das flache Ende der Kugelschale kann mittels eines Deckels verschlossen werden. Die Durchtrittsöffnungen sind vorzugsweise im Randbereich der Kugelschale angeordnet. Für eine optisch ansprechendere Gestaltung kann die Kugelschale in einen zylindrischen Bereich übergehen und durch diesen verlängert werden. Diese Bauweise vergrößert zudem den im Innern des Gehäuses zur Verfügung stehenden Hohlraum.

Die Durchtrittsöffnungen sind vorzugsweise gleichmäßig über den Umfang des rotationssymmetrischen Gehäuses verteilt.

Ein Ausführungsbeispiel der Erfindung wird im folgenden anhand der Zeichnungen erläutert. Darin zeigen:

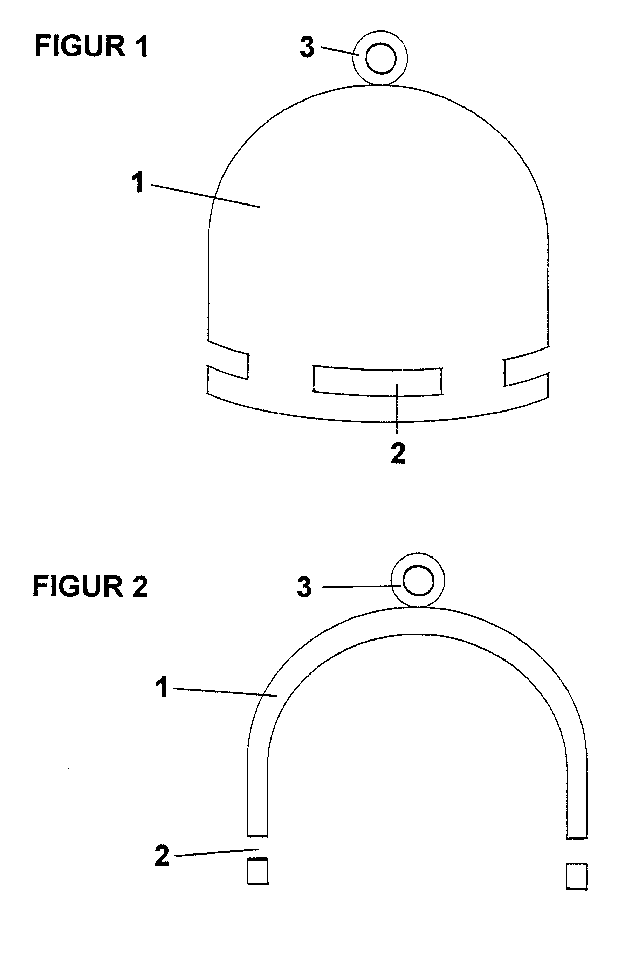

- Fig. 1: eine Ansicht einer erfindungsgemäßen Vorrichtung von der Seite;
- Fig. 2: einen Längsschnitt durch diese Vorrichtung (ohne Dekkel).

Die erfindungsgemäße Vorrichtung weist ein Gehäuse 1 auf, das in seinem oberen Teil kugelschalen- oder kalottenförmig ausgebildet ist und sich nach unten hin zylindrisch erstreckt. Das Gehäuse 1 weist eine nach unten gerichtete kreisförmige Öffnung auf, die durch einen nicht dargestellten Deckel in Form einer Kreisscheibe verschlossen werden kann.

Nahe des unteren Randes des Gehäuses 1 sind vier Durchtrittsschlitze 2 gleichmäßig über den Umfang des Gehäuses verteilt angeordnet. Im oberen Bereich des Gehäuses ist eine Aufhängeöse 3 angeordnet.

Zum Aufhängen eines Adventskranzes bringt man zunächst vier etwa gleich lange Bänder an dem Adventskranz an. Jedes der vier Enden des Bandes wird von außen durch einen Durchtrittsschlitz 2 eingefädelt. Je zwei durch gegenüberliegende Schlitze 2 eintretende Bänder werden verknotet. Die Breite der Schlitze 2 ist so bemessen, daß ein üblicher Knoten diese nicht mehr passieren kann. Nach dem Verknoten der Bänder wird die Vorrichtung mitsamt dem daran angebrachten Adventskranz an einem Haken in der Tragstruktur (Decke) aufgehängt. Die genaue Ausrichtung der Lage des Adventskranzes im Raum geschieht jetzt durch Hin- und Herschieben der Knoten innerhalb des Gehäuses 1. Dies ist bequem möglich, da das Gehäuse nach unten offen ist. Nach genauem Ausrichten des Adventskranzes wird die untere Gehäuseöffnung durch den in der Zeichnung nicht dargestellten Klemmdeckel verschlossen. Die Verknotung der Bänder ist jetzt den Blicken des Betrachters entzogen.

## Patentansprüche

1. Vorrichtung zum Aufhängen eines Objektes mittels Bändern, mit einer Einrichtung (3) zum Befestigen dieser Vorrichtung an einer Tragstruktur, **gekennzeichnet durch** ein Gehäuse (1) und wenigstens zwei in der Gehäusewandung angeordnete Durchtrittsöffnungen (2) für die Bänder.

2. Vorrichtung nach Anspruch 1, **dadurch gekennzeichnet, daß** das Gehäuse (1) geschlossen ist.

3. Vorrichtung nach Anspruch 2, **dadurch gekennzeichnet, daß** das Gehäuse (1) eine verschließbare Öffnung aufweist.

4. Vorrichtung nach Anspruch 3, **dadurch gekennzeichnet, daß** die verschließbare Öffnung im montierten Zustand der Vorrichtung nach unten weist.

5. Vorrichtung nach einem der Ansprüche 1 bis 4, **dadurch gekennzeichnet, daß** das Gehäuse (1) eine gerade Zahl von Durchtrittsöffnungen (2) für die Bänder aufweist.

6. Vorrichtung nach Anspruch 5, **dadurch gekennzeichnet, daß** das Gehäuse vier Durchtrittsöffnungen (2) für die Bänder aufweist.

7. Vorrichtung nach einem der Ansprüche 1 bis 6, **dadurch gekennzeichnet, daß** die Durchtrittsöffnungen (2) als Schlitze ausgebildet sind.

8. Vorrichtung nach einem der Ansprüche 1 bis 7, **dadurch gekennzeichnet, daß** das Gehäuse (1) um seine im Montagezustand senkrechte Achse rotationssymmetrisch ausgebildet ist.

9. Vorrichtung nach Anspruch 8, **dadurch gekennzeichnet, daß** die Durchtrittsöffnungen (2) gleichmäßig über den Umfang des rotationssymmetrischen Gehäuses (1) verteilt sind.
